# EUROPEAN PATENT APPLICATION

(11) **EP 2 763 335 A1**
(43) Date of publication of application: **06.08.2014**
(21) Application number: 13153566.8
(22) Date of filing: 31.01.2013
(51) Int. Cl.: H04B 11/00, E21B 47/14

(54) **Transmitter and receiver band pass selection for wireless telemetry systems**

(71) Applicant: Service Pétroliers Schlumberger, 75007 Paris (FR); Schlumberger Holdings Limited, Tortola (VG); Prad Research Development Limited, Tortola (VG); SCHLUMBERGER TECHNOLOGY B.V., 2514 JG Den Haag (NL)
(72) Inventor: Croux, Arnaud, 92142 Clamart (FR)
(74) Representative: Rzaniak, Martin

(57) **Abstract**

An acoustic modem and method are presented. The method includes entering a training phase by a first modem and transmitting in parallel at least two acoustic messages on at least two different frequencies. A second modem enters a training phase and receives the at least two acoustic messages, measures a reception quality for each, and selects a subset of the at least two different frequencies for communication of data. The modems enter a communication phase and at least one of the modems transmits in parallel a first acoustic message having a first data on the first selected frequency, and a second acoustic message having a second data on the second selected frequency. The acoustic modem has a transceiver assembly having transmitter electronics, receiver electronics, and at least one programmable electronic device adapted to execute instructions to cause the acoustic modem to enter the training phase and the communication phase.

## Description

### BACKGROUND

One of the more difficult problems associated with any borehole is to communicate measured data between one or more locations down a borehole and the surface, or between downhole locations themselves. For example, in the oil and gas industry it is desirable to communicate data generated downhole to the surface during operations such as drilling, perforating, fracturing, and drill stem or well testing; and during production operations such as reservoir evaluation testing, pressure and temperature monitoring. Communication is also desired to transmit intelligence from the surface to downhole tools or instruments to effect, control or modify operations or parameters.

Accurate and reliable downhole communication is particularly important when complex data comprising a set of measurements or instructions is to be communicated, i.e., when more than a single measurement or a simple trigger signal has to be communicated. For the transmission of complex data it is often desirable to communicate encoded digital signals.

Downhole testing is traditionally performed in a "blind fashion": downhole tools and sensors are deployed in a well at the end of a tubing string for several days or weeks after which they are retrieved at surface. During the downhole testing operations, the sensors may record measurements that will be used for interpretation once retrieved at surface. After the downhole testing tubing string is retrieved the operators will know whether the data are sufficient and not corrupted. Similarly when operating some of the downhole testing tools from surface, such as tester valves, circulating valves, packers, samplers or perforating charges, the operators do not obtain a direct feedback from the downhole tools.

In this type of downhole testing operations, the operator can greatly benefit from having a two-way communication between surface and downhole. However, it can be difficult to provide such communication using a cable since inside the tubing string it limits the flow diameter and often employs complex structures to pass the cable from the inside to the outside of the tubing. A cable inside the tubing is also an additional complexity in case of emergency disconnect for an offshore platform. Space outside the tubing is limited and a cable can easily be damaged. Therefore a wireless telemetry system is often used.

A number of proposals have been made for wireless telemetry systems based on acoustic and/or electromagnetic communications. Examples of various aspects of such systems can be found in: US5050132; US5056067; US5124953; US5128901; US5128902; US5148408; US5222049; US5274606; US5293937; US5477505; US5568448; US5675325; US5703836; US5815035; US5923937; US5941307; US5995449; US6137747; US6147932; US6188647; US6192988; US6272916; US6320820; US6321838; US6912177; EP0550521; EP0636763; EP0773345; EP1076245; EP1193368; EP1320659; EP1882811; WO96/024751; WO92/06275; WO05/05724; WO02/27139; WO01/3 9412; WO00/77345; WO07/095111.

Tubing within a downhole environment can be constructed of a plurality of pipe sections that are connected together using threaded connections at both ends of the pipe sections. The pipe sections can have uniform or non-uniform pipe lengths. With respect to the non-uniform lengths, this may be caused by the pipe sections being repaired by cutting part of the connection to re-machine the threads. The uniformity or non-uniformity of the pipe lengths can affect the way in which acoustic messages propagate along the tubing.

Because of the repetitive structure of the pipe sections, the characteristic of the acoustic propagation along pipe sections is such that the frequency response of the channel is complex. The spectrum has numerous band-passes and band-stops. Given the spectrum and the use of a mono-carrier modulation scheme, choosing a peak for the carrier frequency of the transmitted modulated signal where noise is incoherent with the signal is advantageous in terms of signal to noise ratio. Choosing a carrier frequency around a locally flat channel response, i.e. no distortion, is advantageous to maximize the bit rate. In any case, the carrier frequency may be chosen in situ, and the process of choosing the right carrier frequency may take time and computing resources and should be as simple as possible.

US 2006/0187755 by Robert Tingley discloses a method and system for communicating data through a drill string by transmitting multiple sets of data simultaneously at different frequencies. The Tingley reference attempts to optimize the opportunity of successful receipt despite the acoustic behavior of the drill string, thereby avoiding the problem of selecting a single frequency.

Moreover, US 5,995,449 by Clark Robison et al. discloses a method and apparatus for communicating in a wellbore utilizing acoustic signals. However, the Robison et al. disclosure relates specifically to an apparatus and method for transmitting acoustic waves through the completion liquid as a transmission medium, rather than the tubing or pipe string.

In one method of "calibrating" the carrier frequency, a wireline probe is installed in a tubular string to communicate with acoustic modems (e.g., acoustic transceivers) interconnected in the tubular string. When initiated by an operator at the surface, the wireline probe prompts one of the acoustic modems to transmit a sweep of frequencies. See, for example, U.S. Patent Publication No. 2008/0180273

The wireline probe is positioned at another acoustic modem during the transmission of the frequency sweep, in order to detect characteristics of the received signals. The operator can then select which carrier frequency is optimum for transmission of messages between the two acoustic modems.

It will be appreciated that this method is time-consuming, involves installation and operation of the wireline probe, and employs the services of a highly skilled operator. This method, and the method which uses prior knowledge of a particular carrier frequency, are also not suited for coping with changes in the well environment over time (which will also change the optimum carrier frequency), without repeating the expensive and complex operation of calibrating or changing the carrier frequency.

Techniques have been proposed for calibrating the carrier frequency without human intervention and without prior knowledge of the modulating carrier frequency. See for example U.S. Patent Publication No. 2008/0180273 which describes a method for detecting a usable downhole wireless telemetry system carrier frequency where a first telemetry device transmits one or more message(s) modulated on a carrier frequency; then checks whether a response to the message is received at the first telemetry device from a second telemetry device, and each time the response is not received, repeating the transmitting and checking with an incremented carrier frequency.

However, the robustness of the system is not based solely on the carrier frequency. For example, if the channel is chaotic within the band pass of the modulated signals, or depending upon the impulse response, the transmitted modulated signals are distorted by the channel. The distortion creates Inter Symbol Interference ("ISI"). When the received signals are decoded, the ISI causes bit errors. If the symbol rate is increased, the ISI increases and the probability of having bit errors also increase. The channel may also attenuate the transmitted modulated signals. This attenuation decreases the Signal to Noise Ratio (i.e., "SNR") which is defined as the power of the modulated signals over the noise power. The receiver decodes received modulated signals having a minimum SNR value. If the channel attenuates the modulated signals too much, the received signals cannot be properly decoded by the receiver. These effects depend on the band pass of the modulated signals and affect the ability of the receiver to decode the encoded information. It should be pointed out that for mono-carrier modulations, the modulated signals are narrow band. Thus, a given carrier frequency can be usable, but not at a given bit rate.

Multiplexing schemes, such as Orthogonal Frequency-Division Multiplexing (OFDM), may be used in order to facilitate downhole communications. OFDM uses a number of closely spaced orthogonal sub-carrier signals, wherein the orthogonal sub-carrier signals are modulated into frequencies with the minimum frequency spacing to prevent cross frequency interference. OFDM may employ each of the multiple carrier frequencies to carry information, sending the same amount of energy on each of the multiple carrier frequencies. A Bit Error Rate (BER) may be specified to define the reliability of a system. The BER depends on the ratio of the received energy per bit over the noise power spectral density ratio (E_{b}N₀). The E_{b}N₀ is a normalized SNR measure per bit. The E_{b}N₀ may compare BER performance without taking bandwidth into account. To increase the reliability of the system, redundant information may be encoded on several of the multiple carrier frequencies, with the goal of increasing the E_{b}N₀ and to decrease the BER. In downhole communications, stop-bands may be presented within the signal. No information may be transmitted across frequencies occurring within the stop-bands. Using redundant information in the stop-band may increase the energy in the noise due to the increase of bandwidth per bit while the useful energy received remains the same. Pass-bands may occur, between these stop-bands, where information may be transmitted, with the bit-rate proportional to the bandwidth of the pass-band. Where acoustic channels are not fully known before the beginning of communication, the location of pass-bands may not be known.

In the downhole environment, it is difficult to increase the processing power of circuitry within the receiver due to the harshness of the downhole environment and limited power sources. For this reason, methodologies that use less processing complexity are desirable because such methodologies extend the use of the limited power sources.

It may therefore be desirable to have a technique and apparatus for the detection of pass-bands and to allocate available energy into frequencies located within the pass-bands of the communication channel. It may also be desirable to have an acoustic modem that facilitates the transmission in parallel of multiple acoustic messages across multiple frequencies for the selection of appropriate communications frequencies for acoustic messages transmitted along at least a portion of a tubing section in a borehole for more reliable data transmission with higher bit rate. It is to such an acoustic modem and method of transmission that the present disclosure is directed.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In one aspect, the present disclosure describes a method of transmitting data along tubing in a borehole. In the method, a training phase is entered in which at least two acoustic messages are transmitted in parallel by a first modem at a first location on the tubing on at least two different frequencies. The at least two acoustic messages are received by a second modem at a second location on the tubing. During the training phase the receiver electronics of the second modem receive the at least two acoustic messages. The second modem measures the quality of the reception for each of the at least two acoustic messages and selects a subset of the at least two different frequencies for communication of data during a communication phase. The choice of the set of sub-carriers that provide robust communication is then communicated to the transmitter and both modems can enter in the communication phase. When the communication phase is entered by the first and second modems, at least one of the first and second modems transmits in parallel a first acoustic message having first data on the first selected frequency and a second acoustic message having second data on the second selected frequency. The first data and the second data are different.

In another version, the present disclosure describes an acoustic modem for communication in a network of acoustic modems via a communication channel. The acoustic modem is provided with a transceiver assembly adapted to convert acoustic messages into electrical signals. The acoustic modem is also provided with transceiver electronics and a power supply supplying power to the transceiver assembly and the transceiver electronics. The transceiver electronics are provided with transmitter electronics, receiver electronics, and at least one programmable electronic device. The least one programmable electronic device is adapted to execute instructions to (1) cause the transceiver assembly to enter a training phase, (2) cause the transmitter electronics to transmit in parallel at least two acoustic messages on at least two different frequencies during the training phase, (3) cause the receiver electronics to receive electrical signals indicative of at least two acoustic messages on at least two different frequencies during the training phase, (4) identify, demodulate, and measure an energy level for each of the at least two acoustic messages received by the receiver electronics, and (5) select a subset of the at least two different frequencies for communication of data from the at least two different frequencies for the acoustic messages received by the receiver electronics.

In yet other aspects, the at least one programmable electronic device of the receiver electronics enables the transmitter electronics to transmit an acknowledgement, and the at least one programmable electronic device executes instructions to cause (4) and (5) to execute sequentially.

In yet another version, the present disclosure describes an acoustic modem for communication in a network of acoustic modems via a communication channel. The acoustic modem is provided with a transceiver assembly, transceiver electronics, and a power supply. The transceiver assembly is adapted to convert electrical signals into acoustic messages. The transceiver electronics is provided with transmitter electronics and receiver electronics. The transmitter electronics and the receiver electronics are coupled to the transceiver assembly. At least one programmable electronic device is also provided to execute instructions to (1) cause the transceiver assembly to enter a communication phase, and (2) transmit in parallel a first acoustic message having first data on a first selected frequency and a second acoustic message having second data on a second selected frequency with the first data and the second data being different.

### BRIEF DESCRIPTION OF THE DRAWINGS

Certain embodiments of the present disclosure will hereafter be described with reference to the accompanying drawings, wherein like reference numerals denote like elements, and:

Figure 1 shows a schematic view of an acoustic telemetry system according to an embodiment of the present disclosure;

Figure 2 shows a schematic of an acoustic modem as used in accordance with the embodiment of Figure 1;

Figure 3 shows a variant of the embodiment of Figure 1;

Figure 4 shows a hybrid telemetry system according to an embodiment of the present disclosure;

Figure 5 shows a schematic view of an acoustic modem in accordance with the present disclosure;

Figure 6 shows a detailed view of a downhole installation incorporating the acoustic modem of Figure 5;

Figure 7 shows one embodiment of mounting the modem according to an embodiment of the present disclosure;

Figure 8 shows one embodiment of mounting a repeater modem according to an embodiment of the present disclosure;

Figure 9 shows a dedicated modem sub for mounting according to an embodiment of the present disclosure;

Figures 10, 11, and 12 illustrate applications of a hybrid telemetry system according to an embodiment of the present disclosure;

Figure 13 illustrates a flow diagram of a method according to an embodiment of the present disclosure;

Figure 14 shows an example of a communications frame in accordance with the present disclosure; and

Figure 15 shows an example of an acoustic message sent during a training phase in accordance with the present disclosure.

### DETAILED DESCRIPTION

Specific embodiments of the present disclosure will now be described in detail with reference to the accompanying drawings. It is to be understood that the various embodiments disclosed in the present disclosure, although different, may not be mutually exclusive. For example, a particular feature, structure, or characteristic described herein in connection with one embodiment may be implemented within other embodiments without departing from the spirit and scope of the present disclosure. Further, in the following detailed description of embodiments of the present disclosure, numerous specific details are set forth in order to provide a more thorough understanding of the present disclosure. However, it will be apparent to one of ordinary skill in the art that the embodiments disclosed herein may be practiced without these specific details. In other instances, well-known features have not been described in detail to avoid over complicating the description.

It should also be noted that in the development of any such actual embodiment, numerous decisions specific to circumstance may be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The terminology and phraseology used herein is solely used for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited.

Furthermore, the description and examples are presented solely for the purpose of illustrating the different embodiments, and should not be construed as a limitation to the scope and applicability. While any composition or structure may be described herein as comprising certain materials, it should be understood that the composition could optionally comprise two or more different materials. In addition, the composition or structure can also comprise some components other than the ones already cited. Although some of the following discussion emphasizes fracturing, the compositions and methods may be used in any well treatment employing diversion. Examples include fracturing, acidizing, water control, chemical treatments, and wellbore fluid isolation and containment. Embodiments will be described for hydrocarbon production wells, but it is to be understood that they may be used for wells for production of other fluids, such as water or carbon dioxide, or, for example, for injection or storage wells. It should also be understood that throughout this specification, when a range is described as being useful, or suitable, or the like, it is intended that any value within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each possible number along the continuum between about 1 and about 10. In other words, when a certain range is expressed, even if a few specific data points are explicitly identified or referred to within the range, or even when no data points are referred to within the range, it is to be understood that the inventors appreciate and understand that any data points within the range are to be considered to have been specified, and that the inventors have possession of the entire range and the points within the range.

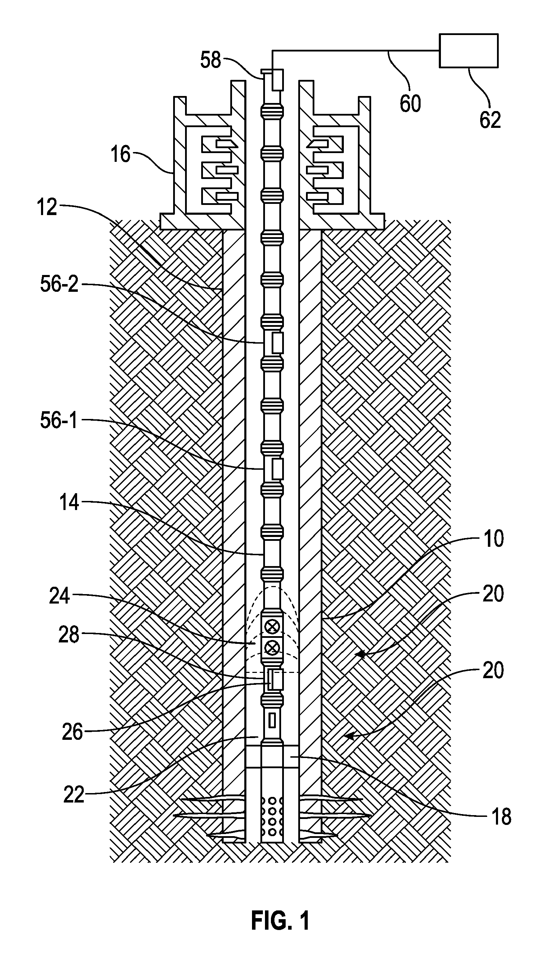

The present disclosure is particularly applicable to testing installations such as are used in oil and gas wells or the like. Figure 1 shows a schematic view of such a system. Once a well 10 has been drilled through a formation, the drill string can be used to perform tests, and determine various properties of the formation through which the well has been drilled. In the example of Figure 1, the well 10 has been lined with a steel casing 12 (cased hole) in the conventional manner, although similar systems can be used in unlined (open hole) environments. In order to test the formations, the testing apparatus in the well may be placed close to the regions to be tested, to be able to isolate sections or intervals of the well, and to convey fluids from the regions of interest to the surface. This is commonly done using a jointed tubular drill pipe, drill string, production tubing, sections thereof, or the like (collectively, tubing 14) which extends from well-head equipment 16 at the surface down inside the well 10 to a zone of interest. The well-head equipment 16 can include blow-out preventers and connections for fluid, power and data communication.

A packer 18 is positioned on the tubing 14 and can be actuated to seal the borehole around the tubing 14 at the region of interest. Various pieces of downhole test equipment (collectively, downhole equipment 20) are connected to the tubing 14 above or below the packer 18. Such downhole equipment 20 may include, but is not limited to: additional packers; tester valves; circulation valves; downhole chokes; firing heads; TCP (tubing conveyed perforator) gun drop subs; samplers; pressure gauges; downhole flow meters; downhole fluid analyzers; and the like.

In the embodiment of Figure 1, a sampler 22 is located above the packer 18 and a tester valve 24 is located above the packer 18. The downhole equipment 20 is connected to an acoustic modem 26 which can be mounted in a gauge carrier 28 positioned between the sampler 22 and the tester valve 24. The acoustic modem 26 operates to allow electrical signals from the downhole equipment 20 to be converted into acoustic signals for transmission to the surface via the tubing 14, and may also convert acoustic tool control signals from the surface into electrical signals for operating the downhole equipment 20. The term "data," as used herein, is meant to encompass control signals, tool status, and any variation thereof whether transmitted via digital or analog signals.

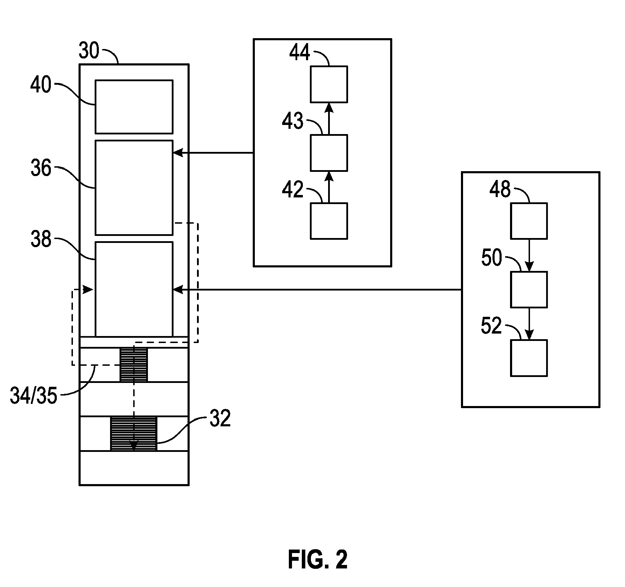

Figure 2 shows a schematic of the acoustic modem 26 in more detail. The acoustic modem 26 comprises a housing 30 supporting a transceiver assembly 32 which can be a piezo electric actuator or stack, and/or a magnetorestrictive element which can be driven to create an acoustic signal in the tubing 14 when the acoustic modem 26 is mounted in the gauge carrier 28. The acoustic modem 26 can also include an accelerometer 34 and/or an additional transceiver assembly 35 for receiving acoustic signals. Where the acoustic modem 26 receives acoustic messages without transmitting, the transceiver assembly 32 may be omitted. The acoustic modem 26 also includes transmitter electronics 36 and receiver electronics 38 located in the housing 30 and power is provided by means of a battery, such as a lithium battery 40. Other types of power supply may also be used.

The transmitter electronics 36 are arranged to initially receive an electrical output signal from a sensor 42, for example from the downhole equipment 20 provided from an electrical or electro/mechanical interface. Such signals may be digital signals which can be provided to a micro-controller 43 which map the sequence of bits in one of a number of known ways PSK, QPSK, DQPSK, or QAM. The sequence of symbols can be modulated using single or multi-carriers. OFDM is an example of multi-carrier modulation. The micro-controller 43 can be implemented as a single micro-controller or two or more micro-controllers working together. In any event, the resulting modulated signal is amplified by either a linear, or non-linear, amplifier 44 and transmitted to the transceiver assembly 32 so as to generate an acoustic signal (which is also referred to herein as an acoustic message) in the material of the tubing 14.

The acoustic signal passes along the tubing 14 as a longitudinal and/or flexural wave comprises a carrier signal with an applied modulation of the data received from the sensors 42. The acoustic signal may have, but is not limited to, a frequency in the range 1-10 kHz, which may be more specifically in the range 2-5 kHz, and is configured to pass data at a rate of, but is not limited to, about 1 bps to about 500 bps, more specifically from about 5 to about 100 bps, and even more specifically about 50 bps. The data rate is dependent upon conditions such as the noise level, attenuation of the acoustic signal, the effective bandwidth of the signal, Inter Symbol Interference, Inter Carrier Interference and the distance between the acoustic modems 26. In one embodiment, the present disclosure is directed to a combination of a short hop acoustic telemetry system for transmitting data between a hub located above the main packer 18 and a plurality of downhole tools and valves below and/or above said packer 18. Then the data and/or control signals can be transmitted from the hub to a surface module either via a plurality of repeaters as acoustic signals or by converting into electromagnetic signals and transmitting straight to the top. The combination of a short hop acoustic with a plurality of repeaters and/or the use of the electromagnetic waves allows an improved data rate over existing systems. The system may be designed to transmit data as high as 500 bps.

The receiver electronics 38 are arranged to receive the acoustic signal passing along the tubing 14 produced by the transmitter electronics of another modem. The receiver electronics 38 are capable of converting the acoustic signal into an electric signal. For instance, the receiver electronics 38 may include a piezoelectric transducer to convert the acoustic signal into an electric signal, with complementary electronics to translate the electric signal to a digital signal substantially free from noise. In one embodiment, the acoustic signal passing along the tubing 14 excites the transceiver assembly 32 so as to generate an electric output signal (voltage); however, it is contemplated that the acoustic signal may excite an accelerometer 34 or additional transceiver assemblies 35 so as to generate an electric output signal (voltage). This signal may be an analog signal carrying digital information to be conveyed for communication. The analog signal is applied to a signal conditioner 48, which operates to filter/condition the analog signal to be digitized by an A/D (analog-to-digital) converter 50. The A/D converter 50 provides a digitalized signal which can be applied to a programmable electronic device 52. The programmable electronic device 52 may be adapted to demodulate the digital signal in order to recover the data provided by the sensor 42 connected to another modem, or provided by the surface. The type of signal processing depends on the applied modulation (i.e. OFDM using PSK, QPSK, QAM, DQPSK, and the like). The programmable electronic device 52 may be implemented as a microcontroller, a field programmable gate array, or any other suitable programmable electronic device, for example.

The acoustic modem 26 can therefore operate to transmit acoustic data signals from the output of the sensors 42 in the downhole equipment 20 along the tubing 14. In this case, the electrical signals from the downhole equipment 20 are digitized and then encoded to be transmitted by the electronics 36 (described above) which operate to generate the acoustic signal. The acoustic modem 26 can also operate to receive acoustic signals to send commands and/or queries to the downhole equipment 20. In this case, the acoustic signals are demodulated and decoded by the receiver electronics 38 (described above), which operate to generate the electric control signal that can send commands and/or queries to the downhole equipment 20.

In order to support acoustic signal transmission along the tubing 14 between the downhole location and the surface, a series of repeater modems 56-1, 56-2, etc. may be positioned along the tubing 14. These repeater modems 56-1 and 56-2 can operate to receive an acoustic signal generated in the tubing 14 by a preceding modem and to amplify and retransmit the signal for further propagation along the drill string. The number and spacing of the repeater modems 56-1 and 56-2 will depend on the particular installation selected, for example on the distance that the signal can travel. A typical spacing between the modems is around 1,000 ft, approximately 304 m, but may be much more or much less in order to accommodate testing tool configurations. When acting as a repeater, the acoustic signal is received and processed by the receiver electronics 38 and the output signal is provided to the programmable electronic device 52 of the transmitter electronics 36 and used to drive the transceiver assembly 32 in the manner described above. Thus an acoustic signal can be passed between the surface and the downhole location in a series of short hops.

The role of the repeater modems 56-1 and 56-2 may be to detect an incoming signal, to decode it, to interpret it and to subsequently rebroadcast it. The repeater modems 56-1 and 56-2 may receive and transmit acoustic signals similarly to modem 26. In some embodiments, the repeater modems 56-1 and 56-2 may not include an interface connection to a downhole tool. In some implementations, the repeater modems 56-1 and 56-2 do not decode the signal but merely amplify the signal (and the noise). In this case the repeater modems 56-1 and 56-2 are acting as a simple signal booster.

Repeater modems 56-1 and 56-2 are positioned along the tubing/piping string. A repeater modem 56-1 and 56-2 will either listen continuously for any incoming signal or may listen from time to time.

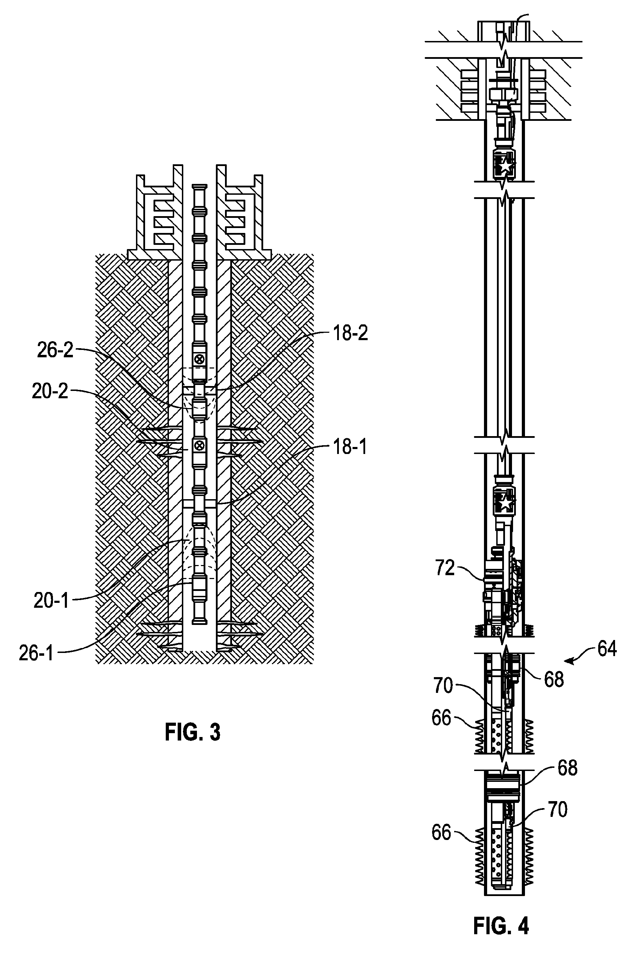

The acoustic wireless signals, conveying commands or messages, may propagate in the transmission medium (the tubing 14) as acoustic waves in an omni-directional fashion, that is to say up and down the tubing 14 toward the surface and toward the drill head respectively. The acoustic modem 26 may not know whether the acoustic signal is coming from the acoustic modem 56 above or below. The direction of the acoustic message may be embedded in the acoustic message itself. Each acoustic message contains several network addresses: the address of the acoustic modem 26, 56-1, or 56-2 (last and/or first transmitter) originating the acoustic message and the address of the acoustic modem 26, 56-1, or 56-2 that is the destination. Based on the addresses embedded in the acoustic messages, the repeater modems 56-1 and 56-2 will interpret the acoustic message and construct a new message with updated information regarding the acoustic modem 26, 26-1, or 26-2 (see Figure 3) that originated the acoustic message and the destination addresses. Acoustic messages will be transmitted from repeater modems 56-1 and 56-2 to other repeater modems 56-1 and 56-2 and may be slightly modified to include new network addresses. Because the acoustic channel may be different from the repeater modems 56-1 and 56-2 to the other repeater modems 56-1 and 56-2, communication parameters such as bandwidth and carrier frequencies may be different at each transmission of an acoustic signal between the modems 26, 56-1, and 56-2.

Referring again to Figure 1, a surface modem 58 is provided among the well-head equipment 16 which provides a connection between the tubing 14 and a data cable or wireless connection 60 to a control system 62 that can receive data from the downhole equipment 20 and provide control signals for its operation.

In the embodiment of Figure 1, the acoustic telemetry system is used to provide communication between the surface and the downhole location. Figure 3 shows another embodiment in which acoustic telemetry is used for communication between tools in multi-zone testing. In this case, two zones A, B of the well are isolated by means of packers 18-1 and 18-2. Test equipment 20-1 and 20-2 is located in each isolated zone A, B, corresponding acoustic modems 26-1 and 26-2 being provided in each case. Operation of the acoustic modems 26-1 and 26-2 allows the equipment 20-1 and 20-2 in each zone to communicate with each other as well as allowing communication from the surface with control and data signals in the manner described above.

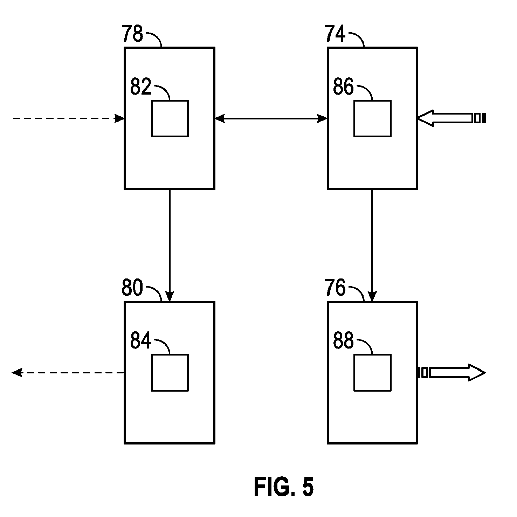

Figure 4 shows an embodiment of the present disclosure with a hybrid telemetry system. The testing installation shown in Figure 4 comprises a lower section 64 which corresponds to that described above in relation to Figures 1 and 3. As before, downhole equipment 66 and packer(s) 68 are provided with acoustic modems 70. However, in this case, the uppermost modem 72 differs in that signals are converted between acoustic and electromagnetic formats. Figure 5 shows a schematic of the modem 72. Acoustic transmitter and receiver electronics 74, 76 correspond to those described above in relation to Figure 2, receiving and emitting acoustic signals via transceiver assembly 32 (or accelerometers). Electromagnetic (EM) receiver and transmitter electronics 78 and 80 are also shown, each of which having an associated programmable electronic device 82 and 84, respectively; however, it should be appreciated, that the EM receiver and transmitter electronics 78, 80 may also share a single programmable electronic device. A typical EM signal will be a digital signal may be in the range of 0.25 Hz to about 8 Hz, and more specifically around 1 Hz. This signal is received by the receiver electronics 78 and passed to an associated programmable electronic device 82. Data from the programmable electronic device82 can be passed to the acoustic receiver programmable electronic device86 and on to the acoustic transmitter programmable electronic device88 where it is used to drive the acoustic transmitter signal in the manner described above. Likewise, the acoustic signal received at the receiver programmable electronic device86 can also be passed to the EM receiver programmable electronic device 82 and then on to the EM transmitter programmable electronic device 84 where it is used to drive an EM transmitter antenna to create the digital EM signal that can be transmitted along the well to the surface. In another embodiment (not shown), the acoustic transmitter and receiver electronics 74 and 76 may share a single programmable electronic device adapted for modulating and demodulating the digital signal. The programmable electronic devices 82, 84, and 86 may be implemented, for instance, as a microcontroller, a field programmable gate array, or any other suitable programmable electronic device. A corresponding EM transceiver (not shown) can be provided at the surface for connection to a control system.

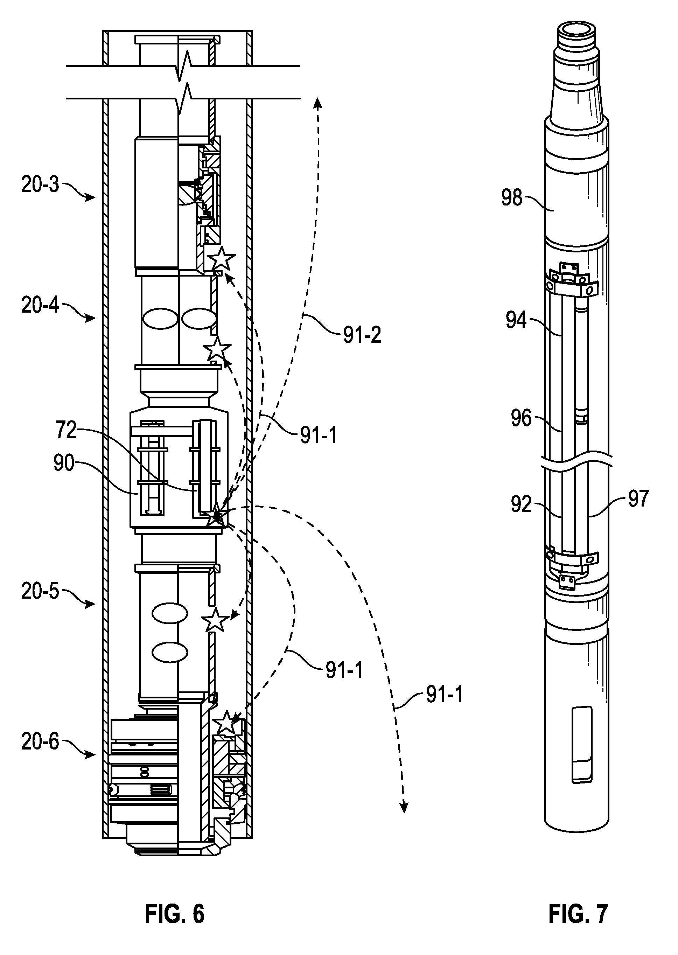

Figure 6 shows a more detailed view of a downhole installation in which the modem 72 forms part of a downhole hub 90 that can be used to provide short hop acoustic telemetry 91-1 with the various downhole tools 20 (e.g. test and circulation valves 20-3, flowmeter 20-4, fluid analyzer 20-5, and packer 20-6, and other tools below the packer 20-7), and long hop EM telemetry 91-2 to the surface. It should be understood that while not show, the EM telemetry signal may be transmitted further downhole to another downhole hub or downhole tools.

Figure 7 shows the manner in which a modem 92 can be mounted in downhole equipment. In the case shown, the modem 92 is located in a common housing 94 with a pressure gauge 96, although other housings and equipment can be used. The housing 94 is positioned in a recess 97 on the outside of a section of tubing 98 provided for such equipment, the recess 97 is commonly referred to as a gauge carrier. By securely locating the housing 94 in the recess 97, the acoustic signal can be coupled to the tubing 98. Each piece of downhole equipment may have its own modem for providing the short hop acoustic signals, either for transmission via the hub and long hop EM telemetry, or by long hop acoustic telemetry using repeater modems 56-1 and 56-2. The modem 92 is hard wired into the sensors and actuators of the equipment so as to be able to receive data and provide control signals. For example, where the downhole equipment comprises an operable device such as a packer, valve or choke, or a perforating gun firing head, the modem 92 will be used to provide signals to set/unset, open/close or fire as appropriate. Sampling tools can be instructed to activate, pump out, etc.; and sensors such as pressure and flow meters can transmit recorded data to the surface. In most cases, data will be recorded in tool memory and then transmitted to the surface in batches. Likewise tool settings can be stored in the tool memory and activated using the acoustic telemetry signal.

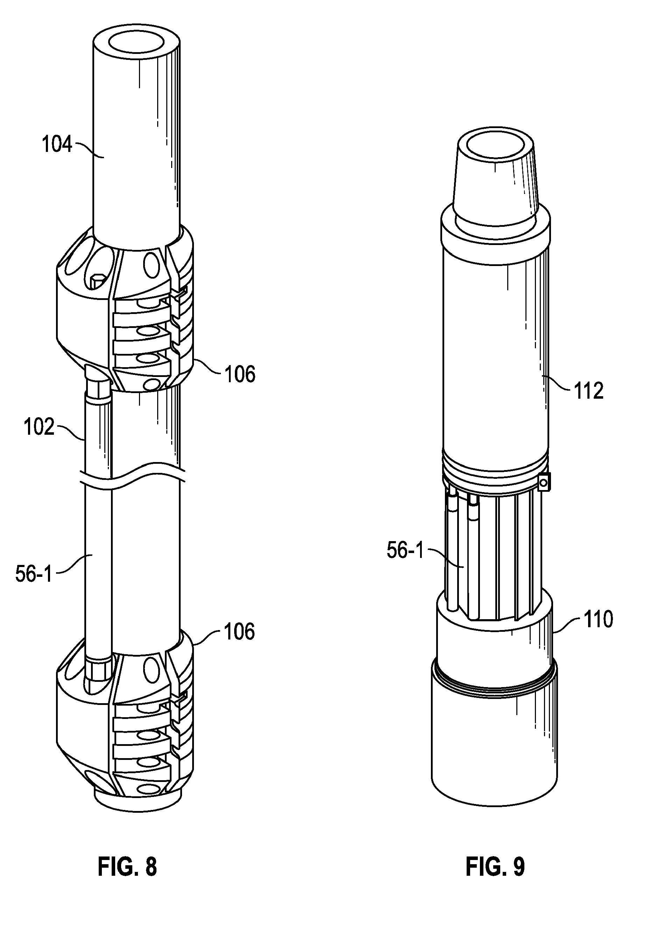

Figure 8 shows one embodiment for mounting the repeater modem 56-1 on tubing 104. In this case, the repeater modem 56-1 is provided in an elongate housing 102 which is secured to the outside of the tubing 104 by means of clamps 106. Each modem 100 may be a stand-alone installation, the tubing 104 providing both the physical support and signal path.

Figure 9 shows another embodiment for mounting the repeater modem 56-1. In this case, the repeater modem 56-1 is mounted in an external recess 110 of a dedicated tubular sub 112 that can be installed in the drill string between adjacent sections of drill pipe, or tubing. Multiple modems can be mounted on the sub for redundancy.

In one embodiment, the present disclosure may comprise a two-way wireless communications system between downhole and surface, combining different modes of electromagnetic and acoustic wave propagations. It may also include a wired communication locally, for example in the case of offshore operations. The system may employ the different technologies and combines them into a hybrid system presented in Figure 4.

Different types of telemetry may be combined to employ features of the different types of telemetry without having the limitations of any single telemetry means. Some applications for embodiments of the present disclosure are for single zone and multi-zone well testing in land and offshore environments. In the case of the deep and ultra-deep offshore environments, the communication link has to be established between the floating platform (not shown) and the downhole equipment 66 above and below the packer 68. The distance between the rig floor (on the platform) and the downhole tools can be considerable, with up to 3km, approximately 1.8 mi, of sea water and 6km, approximately 3.7 mi, of formation/well depth. Communication may jump via a 'Long Hop' from the rig floor to the top of the downhole equipment 66 but afterwards it may occur locally between the downhole equipment 66 (sensors and actuators) via a 'Short Hop' within a zone or across several zones. The Short Hop is used as a communication means that supports distributed communication between the Long Hop system and the individual tools that constitute the downhole equipment 66, as well as between some of these tools within the downhole installation. The Short Hop communication supports: measurement data; gauge pressure and temperature; downhole flowrates; fluid properties; and downhole tool status and activation commands, such as but not limited to: IRDV; samplers (multiple); firing heads (multiple); packer activation; other downhole tools (i.e., tubing tester, circulating valve, reversing valve); and the like.

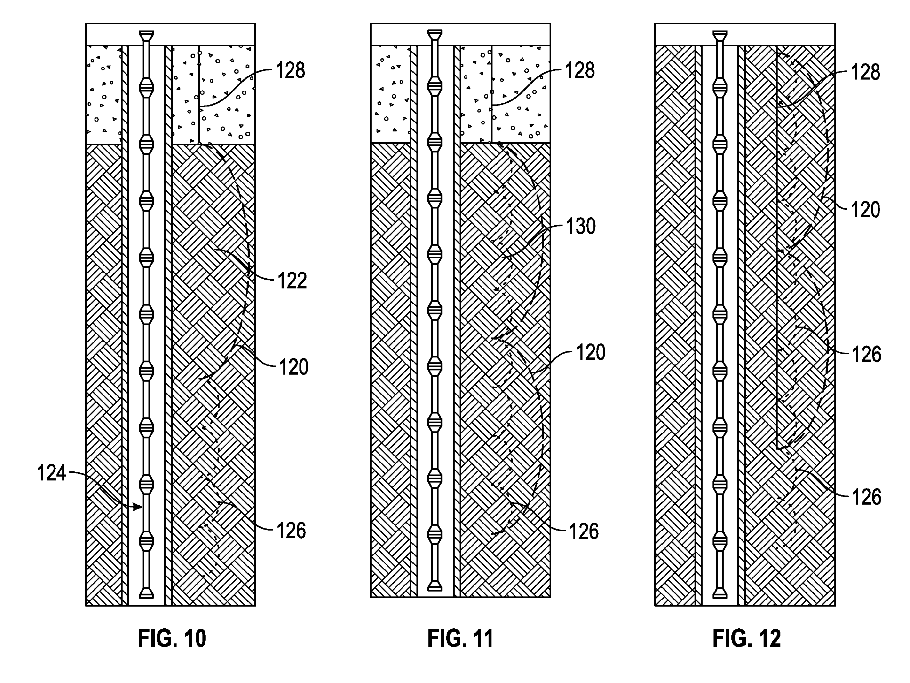

Telemetry channels, being wireless or not, have limitations from a bandwidth, deployment, cost or reliability point of view. These are summarized in Figure 10.

At low frequency (∼1 Hz), electromagnetic waves 120 propagate very far with little attenuation through the formation 122. The higher the formation resistivity, the longer the wireless communication range. The main advantages of electromagnetic wave communication relate to the long communication range, the independence of the flow conditions and the tubing string configuration 124.

Acoustic wave propagation 126 along the tubing string 124 can be made in such a way that each element of the system is small and power effective by using high frequency sonic wave (1 to 10 kHz). In this case, the main advantages of this type of acoustic wave communication relate to the small footprint and the medium data rate of the wireless communication.

Electrical or optical cable technology 128 can provide the largest bandwidth and the most predictable communication channel. The energy used for digital communication may also be limited with electrical or optical cable, compared to wireless telemetry systems. It is however costly and difficult to deploy cable over several kilometers in a well (rig time, clamps, subsea tree) especially in the case of a temporary well installation, such as a well test.

In the case of deep-offshore single zone or multi-zone well testing, an appropriate topology for the hybrid communication system is to use a cable 128 (optical or electrical) from the rig floor to the seabed, an electromagnetic wireless communication 120 from the seabed to the top of the downhole equipment and an acoustic communication 126 for the local bus communication.

Another way to combine the telemetry technologies is to place the telemetry channels in parallel to improve the system reliability through redundancy.

Figures 11 and 12 represent two cases where two or three communication channels are placed in parallel. In Figure 11, both electromagnetic 120 and acoustic 126 wireless communication is used to transmit data to the wellhead; and a cable 128 leads from the wellhead to the rig floor (not shown). In such configurations, common nodes 130 to the different communication channels can be used. Such common nodes 130 have similar functions to the hub described above in relation to Figure 6. In Figure 12, electromagnetic 120 and acoustic 126 wireless, and cable 128, are provided down to the downhole location, the acoustic wireless signal being used between the downhole tools. The selection of the particular communication channel used can be done at surface or downhole or at any common node between the channels. Multiple paths exist for commands to go from surface to downhole and for data and status to go from downhole to surface. In the event of communication loss on one segment of one channel, an alternate path can be used between two common nodes.

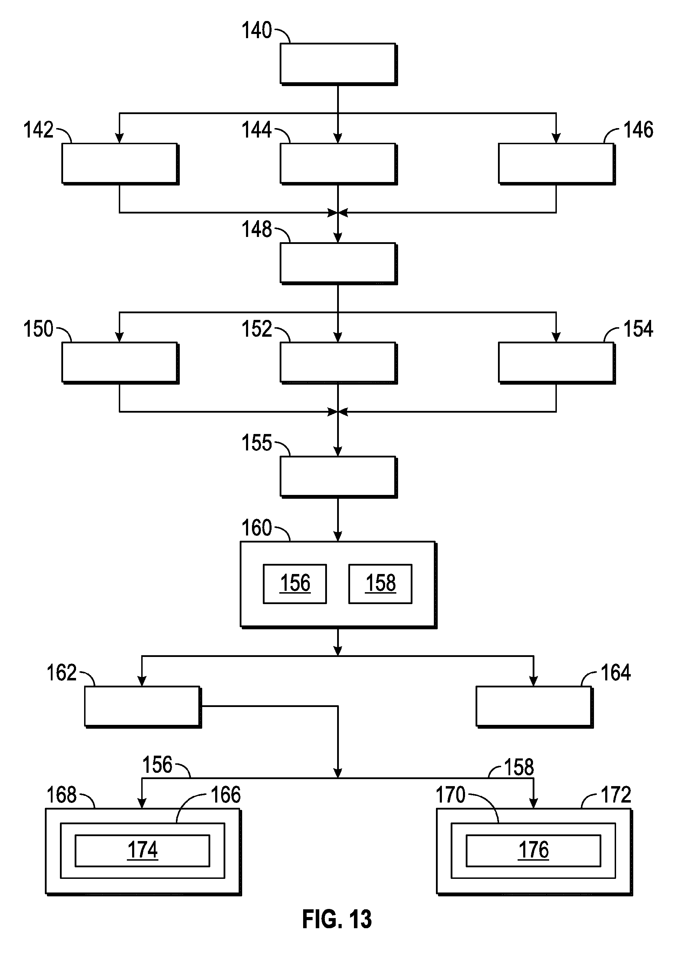

One embodiment of the present disclosure is based on an encoding scheme, such as OFDM, in which a transmitter transmits a message (i.e., a control signal or data signal) on multiple carrier frequencies belonging to a set S_{f} of N frequencies. The embodiment may use a transmitter for parallel transmission of multiple messages and a receiver which simultaneously tries to demodulate the incoming messages transmitted by another tool/modem across the set of frequencies S_{f}. One embodiment of the protocol is illustrated in Figure 13, in which S_{f} is shown to comprise three frequencies F₁-F₃, however, the set of frequencies may include much more.

In the example illustrated in Figure 13, the surface modem 58 initiates a training phase with a second modem, such as acoustic modem 56, at 140. The surface modem 58 may transmit in parallel at least two acoustic messages M₁-M₂ on at least two different frequencies F₁-F₂. In one embodiment, as shown in Figure 13, the acoustic modem 26 may transmit three acoustic messages M₁-M₃ on three frequencies F₁-F₃ with a first acoustic message M₁ on a first frequency F₁ at 142, a second message M₂ on a second frequency F₂ at 144, and a third message M₃ on a third frequency F₃ at 146. The acoustic modem 56, which may be substantially similar to the acoustic modem 26 described above, may receive the at least three acoustic messages M₁-M₃, decode the identification message, and enter a training phase at 148. The acoustic modem 56 may measure a quality of reception for each of the at least three acoustic messages M₁-M₃ at an energy level E₁-E₃ for each of the at least three acoustic messages M₁-M₃ at different frequencies. The acoustic modem 56 may measure a first energy level E₁ for the first acoustic message M₁ at 150, a second energy level E₂ for the second acoustic message M₂ at 152, and a third energy level E₃ for the third acoustic message M₃ at 154. The acoustic modem 56 may then measure the energy of the noise at 155, for example, over the bandwidth of the carrier frequency around the at least three different frequencies F₁-F₃. The acoustic modem 56 may select a first selected frequency 156 and a second selected frequency 158 at 160, from among the at least three different frequencies F₁-F₃, for communication of data during a communication phase. The acoustic modem 56 may then transmit an acoustic message acknowledging receipt of the at least three acoustic messages M₁-M₃, confirming the training is successful, and to communicate the first selected frequency 156 and the second selected frequency 158, indicating the chosen subset of subcarriers, to the surface modem 58. It will be understood by one skilled in the art that the number of frequencies on which messages may be transmitted and the number of frequencies which may be selected may be greater or fewer based on the frequency range available to the acoustic modems. The acoustic modem 56 may then initiate a similar training phase with the acoustic modem 56-2, where the acoustic modem 56-2 is located further down hole toward a last acoustic modem. After completion of the training phase between acoustic modems 56 and 56-2, the acoustic modem 56-2 may initiate a training phase with the acoustic modem 56-1. The acoustic modems may continue initiating and completing training phases, determining appropriate communication frequencies between successive acoustic modems until the last acoustic modem, acoustic modem 26, for instance, has entered and completed a training phase with the preceding acoustic modem, such as acoustic modem 56-1. The successive training phases, completed at each hop between two acoustic modems, may establish a communication network between the surface modem 58 and the last acoustic modem, acoustic modem 26.

The surface modem 58 and the acoustic modem 56 may enter a communication phase at 162 and 164, respectively. At least one of the surface modem 58 and the acoustic modem 56 may transmit in parallel a first acoustic message 166 on the first selected frequency 156 at 168 and a second acoustic message 170 on the second selected frequency 158 at 172. The first acoustic message 166 contains a first data 174 and the second acoustic message 170 contains a second data 176. The first data 174 and the second data 176 may comprise different data. Although Figure 13 shows the surface modem 58 as transmitting the first acoustic message 166 and the second acoustic message 170, it will be understood by one skilled in the art that either the surface modem 58, the first modem, or the acoustic modem 56, the second modem, may transmit or receive the first and second acoustic messages 166 and 170. It will be understood that as each successive acoustic modem pair may initiate a training phase and select communication frequencies, the successive acoustic modem pairs may enter the communication phase after completing the training phase and begin communication. Further, it will be understood that each successive acoustic modem pair may have selected differing frequencies from other acoustic modem pairs for the communication phase, where the selected frequencies of each acoustic modem pair provides suitable communication parameters, such as bandwidth, between the acoustic modems within the pair.

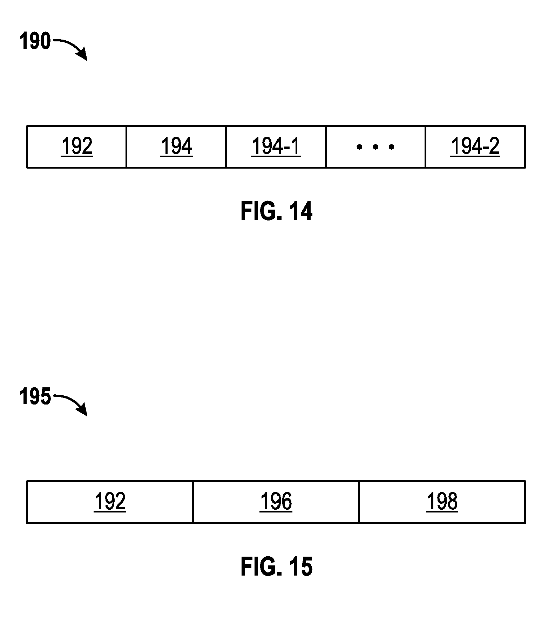

As previously stated, the acoustic modem 56 may enter the training phase at 140, after being instructed to enter the training phase by a signal sent from the surface modem 58. Using the OFDM protocol, the surface modem 58 may send an OFDM frame 190 from the surface modem 58 to acoustic modem 56, shown in Figure 14. The OFDM frame 190 may comprise one or more preamble 192 and one or more symbol 194. The one or more symbol 194 is shown in Figure 14 as multiple symbols 194, 194-1, and 194-2. The one or more preamble 192 may be a sequence of known bits sent in each OFDM frame 190, used for frame synchronization, channel estimation, and modem identification. The one or more symbol 194 may be composed of a prefix cyclic and a packet with information to be broadcast on the multiple carrier frequencies. The prefix cyclic may be used to counteract ISI. In baseband, the packet of the one or more symbol 194 may be composed of N samples, N being the size of a Fast Fourier Transform (FFT). N may also specify the maximum number of carrier frequencies used by the acoustic modem 26. N may be taken as a power of 2 (128, 256, 512, 1024, and 2048) in order to optimize the computation load of the FFT and inverse Fast Fourier Transform (iFFT). The OFDM protocol and similar OFDM frames may be used for the training phase and the communication phase between each successive acoustic modem pair.

While in the training phase, the acoustic modem 26 may transmit in parallel the at least two acoustic messages M₁-M₂ on the at least two different frequencies F₁-F₂. In some embodiments, a greater number of messages may be transmitted in parallel across a greater number of frequencies. The information to be transmitted during the training phase can be encoded with an ECC (Error Correction Code) with a high level of redundancy. During the training phase, the lack of knowledge on the acoustic channel does not give a good confidence of the robustness of the communication at a given frequency. Channel coding may be used to reach robust but inefficient way of communicating with a level of redundancy and low bit rate. The at least two acoustic messages M₁-M₂ may be transmitted on a single OFDM frame 195, as shown in Figure 15. Along with the preamble 192 and the one or more symbols 194, the OFDM frame 195 may contain the error correction code within a training symbol 196. The OFDM frame 195 may also contain a noise symbol 198 where no energy is transmitted. The training symbol 196 may indicate to the acoustic modem 56 to enter the training phase.

The acoustic modem 56 may enter the training phase at 140 by decoding the information that is spread on the at least two acoustic messages M₁-M₂. In the at least two acoustic messages M₁-M₂, , the training symbol 196 may signal the programmable electronic device of the receiver of the acoustic modem 56 to enter the training phase and measure the energy levels for each of the at least two acoustic messages M₁-M₂ received.

In order to measure the energy levels for each of the at least two acoustic messages M₁-M₂ and select the selected subset of the at least two different frequencies, which in one embodiment may be the first frequency 156 and the second frequency 158, the programmable electronic device of the receiver of the acoustic modem 56 may have the ability to compute the FFT of one or more symbols of the OFDM frame 190, where each symbol of the OFDM frame 190 may have energy on the at least two different frequencies F₁-F₂. The programmable electronic device of the receiver of the acoustic modem 56 may also have the ability to process the digital signal of the OFDM frame 190 from passband to baseband. The FFT may also be calculated for each OFDM symbol. The FFT is applied in base band, on the time domain samples. The FFT may be computed on a symbol on which no energy was transmitted, thereby giving the energy of the ambient noise affecting the at least two acoustic messages M₁-M₂ at the at least two different frequencies F₁-F₂. By computing the FFT of the at least two acoustic messages M₁-M₂, the acoustic modem 56 may assess whether and which of the at least two different frequencies F₁-F₂ are suitable for the communication phase with a selection algorithm. In one embodiment, for instance, the acoustic modem 56 may employ a selection algorithm by calculating the E_{b}N₀ for each of the at least two different frequencies F₁-F₂. The energy per bit may first be calculated using the training symbol 196 and then a noise level measured from the noise symbol 198 on each of the at least two different frequencies F₁-F₂. In one embodiment, the acoustic modem 56 may determine which of the at least two different frequencies F₁-F₂ have an E_{b}N₀ higher than a threshold, with a correction applied to adjust for attenuation from a low pass filter. The threshold of the E_{b}N₀ is the minimum E_{b}N₀ level targeted to reach a specified BER. In other embodiments, the acoustic modem 56 may employ a selection algorithm which may select the selected subset of the at least two different frequencies using as factors at least one signal quality parameter comprising of signal distortion, signal strength, ambient noise, signal-to-interference noise ratio, signal-to-noise ratio, channel response time, signal amplitude, and signal auto-correlation.

Once the acoustic modem 56 has measured the energy of the at least three acoustic messages M₁-M₃ and determined which of the at least three different frequencies F₁-F₃has an E_{b}N₀ higher than the threshold to reach the specified BER, the acoustic modem 56 may select one or more selected frequency having an E_{b}N₀ higher than the threshold, for example, the first selected frequency 156 and the second selected frequency 158. The selected subset of the at least two different frequencies, the first frequency 156 and the second frequency 158 may be sufficient to act as communication channels across which the acoustic modem 26 and the acoustic modem 56 may communicate during the communication phase. In another embodiment, a single frequency may serve as the subset of the at least two different frequencies. Prior to entering the communication phase, at the end of the training phase, the acoustic modem 56 may transmit an acoustic message as a confirmation message, which may be sent to acknowledge receipt of the at least two acoustic messages M₁-M₂, confirming the training is successful, and to communicate the one or more selected frequency, indicating the chosen set of subcarriers, to the acoustic modem 26.

Although a few embodiments of the present disclosure have been described in detail above, those of ordinary skill in the art will readily appreciate that many modifications are possible without materially departing from the teachings of the present disclosure. Accordingly, such modifications are intended to be included within the scope of the present disclosure as defined in the claims.

## Claims

1. A method of communicating data along tubing in a borehole, the method comprising:
(i) entering a training phase by a first modem at a first location on the tubing, wherein during the training phase the first modem transmits in parallel at least two acoustic messages on at least two different frequencies;
(ii) entering a training phase by a second modem at a second location on the tubing wherein during the training phase, receiver electronics of the second modem receives the at least two acoustic messages, and measures a quality of reception for each of the at least two acoustic messages, and selects a subset of the at least two different frequencies for communication of data during a communication phase; and
(iii) entering the communication phase by the first and second modems and transmitting in parallel by at least one of the first and second modems a first acoustic message having first data on a first selected frequency, and a second acoustic message having second data on a second selected frequency with the first data and the second data being different.

2. The method of claim 1, wherein a frame within the at least two acoustic messages causes the second modem to enter the training phase.

3. The method of claim 1 or 2, further comprising entering a second training phase between the second modem and a third modem and re-transmitting the data within the at least two acoustic messages received by the second modem to a third modem.

4. The method of claim 1, 2 or 3, further comprising processing the digital signal from passband to baseband.

5. The method of claim 4, further comprising calculating the fast Fourier transforms of the OFDM symbols converted to baseband.

6. The method according to any one of claims 1 to 5 further comprising dividing the data between the first and second selected frequencies using inverse Fourier transform.

7. The method according to any one of claims 1 to 6, wherein the quality of reception for each of the at least two acoustic messages is measured in relation to an energy per bit over a noise energy of the at least two different frequencies.

8. The method according to any one of claims 1 to 7, further comprising utilizing a selection algorithm to select the subset of the at least two different frequencies; and wherein the selection algorithm is selected from a group of at least one signal quality parameter comprising of signal distortion, signal strength, ambient noise, signal-to-interference noise ratio, signal-to-noise ratio, channel response time, signal amplitude, signal auto-correlation, and energy per bit to noise power spectral density ratio.

9. The method according to any one of claims 1 to 8, further comprising the second modem transmitting an acoustic message acknowledging receipt of the at least two acoustic messages, confirming the training phase as successful, and communicating the one or more selected frequency to the first modem.

10. An acoustic modem for communication in a network of acoustic modems via a communication channel, the acoustic modem comprising:
a transceiver assembly adapted to convert acoustic messages into electrical signals, comprising:
transmitter electronics coupled to the transceiver assembly;
receiver electronics comprising coupled to the transceiver assembly;
at least one programmable electronic device adapted to execute instructions to (1) cause the transceiver assembly to enter a training phase, (2) cause the transmitter electronics to transmit in parallel at least two acoustic messages on at least two different frequencies, (3) cause the receiver electronics to receive electrical signals indicative of at least two acoustic messages on at least two different frequencies, (4) measure an energy level for each of the at least two acoustic messages received by the receiver electronics, and (5) select a subset of the at least two different frequencies for communication of data from the at least two different frequencies for the acoustic messages received by the receiver electronics; and
a power supply supplying power to the transceiver assembly and the transceiver electronics.

11. The acoustic modem of claim 10, wherein the at least one programmable electronic device enables the receiver electronics to transmit a confirmation message to confirm the one or more selected frequency.

12. The acoustic modem of claim 10 or 11, wherein the at least one programmable electronic device executes instructions to cause (4) and (5) to execute sequentially.

13. The acoustic modem of claim 10, 11 or 12, wherein the programmable electronic device executes instructions to calculate a fast Fourier transform of a symbol composed of the at least two acoustic messages.

14. The acoustic modem according to any one of claims 10 to 13, wherein the energy level for each of the at least two acoustic messages is measured in relation to the energy per bit over a noise energy of the at least two different frequencies.

15. The acoustic modem according to any one of claims 10 to 14, wherein the subset of the at least two different frequencies for communication of data are selected utilizing a selection algorithm to select the subset of the at least two different frequencies; and wherein the selection algorithm is selected from a group of at least one signal quality parameter comprising of signal distortion, signal strength, ambient noise, signal-to-interference noise ratio, signal-to-noise ratio, channel response time, signal amplitude, signal auto-correlation, and energy per bit to noise power spectral density ratio.

16. An acoustic modem for communication in a network of acoustic modems via a communication channel, the acoustic modem comprising:
a transceiver assembly adapted to convert electrical signals into acoustic messages;
transceiver electronics, comprising:
transmitter electronics coupled to the transceiver assembly;
receiver electronics coupled to the transceiver assembly;
at least one programmable electronic device executing instructions to (1) cause the transceiver assembly to enter a communication phase and (2) transmit in parallel a first acoustic message having first data on a first selected frequency and a second acoustic message having second data on a second selected frequency with the first data and the second data being different; and
a power supply supplying power to the transceiver assembly and the transceiver electronics.

17. The acoustic modem of claim 16, wherein the at least one programmable electronic device of the receiver electronics enables the transmitter electronics to transmit an acknowledgement.

18. The acoustic modem of claim 16, wherein the at least one programmable electronic device executes instructions to cause (1) and (2) to execute sequentially.
